Europäisches Patentamt

European Patent Office

Office européen des brevets

(19)

(11) Publication number: **0 310 163 B1**

(12) **EUROPEAN PATENT SPECIFICATION**

(45) Date of publication of patent specification: **01.12.93**  (51) Int. Cl.5: **B01J 29/38**, B01J 38/12, C10G 47/30

(21) Application number: **88202013.4**

(22) Date of filing: **14.09.88**

(54) **Process for the regeneration of a hydrocracking catalyst.**

(30) Priority: **29.09.87 GB 8722841**

(43) Date of publication of application:
**05.04.89 Bulletin 89/14**

(45) Publication of the grant of the patent:
**01.12.93 Bulletin 93/48**

(84) Designated Contracting States:
**BE DE FR GB LU NL**

(56) References cited:
**EP-A- 0 123 565**
**US-A- 3 929 620**
**US-A- 4 300 014**
**US-A- 4 621 069**

(73) Proprietor: **SHELL INTERNATIONALE RE-
SEARCH MAATSCHAPPIJ B.V.**
**Carel van Bylandtlaan 30**
**NL-2596 HR Den Haag(NL)**

(72) Inventor: **Van Dijk, Nicolaas**
**Carel van Bylandtlaan 30**
**NL-2596 HR The Hague(NL)**
Inventor: **Hoek, Arend**
**Badhuisweg 3**
**NL-1031 CM Amsterdam(NL)**
Inventor: **Sy, Oscar**
**400-4th Avenue S.A.**
**Calgary, Alberta(CA)**

EP 0 310 163 B1

## Description

The present invention relates to a process for the regeneration of a hydrocracking catalyst and the use of such a catalyst in a hydrocracking process.

Hydrocracking is becoming an increasingly important hydroconversion process since it offers product flexibility together with product quality. As it is possible to subject rather heavy feedstocks to hydrocracking, it may be clear that hydrocracking is a commercially very interesting process.

In hydrocracking processes heavy hydrocarbons, e.g. having a mid-boiling point above about 340-370 °C, are contacted with a hydrocracking catalyst at elevated temperature and pressure in the presence of hydrogen. The heavy hydrocarbons are then cracked to yield lighter products. These lighter products include gaseous material, i.e. in general $C_{1-4}$ hydrocarbons, naphtha and a middle distillate fraction i.e. a kerosine fraction and a gas oil fraction. It is evident that different feedstocks may be used and that the cut between the hydrocracked products may be made at various boiling points.

Since the gaseous products are not very much wanted and since there is an increasing demand for middle distillates, it would be advantageous to have a hydrocracking catalyst available that shows an improved selectivity towards middle distillates and a reduced selectivity towards gaseous products, whereas its activity as to the cracking of the heavy hydrocarbons is not affected.

Modern hydrocracking processes generally use zeolite-based catalysts. These catalysts are mainly based on faujasite-type zeolites. The latter zeolites include naturally occurring faujasite, synthetic zeolite X and synthetic zeolite Y. A method for preparing stabilized zeolite Y compositions and use of such compositions in hydrocracking processes are known and have been described, e.g. in US-A-3,929,672. From this specification a zeolite Y is known which has been subjected to a sequence of an ion exchange step to replace sodium ions by ammonium ions, a steam calcination step and a further ion exchange step to yield a zeolite Y with a unit cell size of above 24.40 Å (2.44 nm). The specification further describes how gas oil is hydrocracked over a catalyst comprising the zeolite, a binder, i.e. alumina, and catalytically-active metals, viz. the Group VIB and VIII metals molybdenum and nickel.

Continued use of a hydrocracking catalyst in a hydrocracking process incurs the formation of deposits of carbonaceous material onto the catalyst. Consequently, the activity of the catalyst is reduced. The deposits formation and the loss of catalytic activity may become so severe that regeneration of the catalyst by burning off the deposits formed becomes desirable. Such deactivated catalysts are known as spent catalysts.

It has been accepted that steam, oxygen and high temperatures like those encountered during regeneration to burn off deposited carbonaceous material are in general detrimental to zeolite structure and activity. In US-A-4,463,209 zeolites having a silica to alumina ratio of at least 12 and a so-called constraint index of 1 to 12 can be regenerated in the presence of steam, the constraint index being regarded as a measure of the ratio of the cracking rate constants for n-hexane and 3-methylpentane by the zeolite. For the definition of the constraint index reference is made to US-A-4,463,209. From the table in column 8 in the latter document it is apparent that zeolite Y, ion exchanged by rare earth metals, does not fulfil the requirement of having a constraint index of above 1. It is further stated that the framework of zeolites of the X type irreversibly collapses in the presence of steam and at high temperatures. Hence, one cannot but conclude that according to this US document the faujasite-type-containing catalysts are only fit when the oxidizing gas used to burn off the carbonaceous deposits is very dry.

As is described in the above-mentioned US-A-4,463,209 in relation to spent zeolitic catalysts, and also in US-A-4,218,338 with respect to amorphous hydroconversion catalysts, conventional regeneration makes use of a dryer for the oxidizing gas, in order to reduce the water content thereof as much as possible. Another means for reducing the steam content in the atmosphere during the regeneration is to remove hydrocarbons and/or water, present on the catalyst, if any, before the actual regeneration, e.g. by stripping with an inert gas such as nitrogen, as is done in the regeneration of spent hydroconversion catalysts according to US-A-4,621,069.

From the above-mentioned references it is apparent that the regeneration generally takes place at temperature from 350-550 °C, usually at 400-425 °C and using diluted air having an oxygen content up to 1% by volume.

Reference is further made to EP-A-123565 teaching a specific two-step regeneration method for deactivated conventional amorphous hydrotreatment catalysts. The first step is effected at a temperature of 170-350 °C to remove at least part of the sulphur deposited on the catalyst. The second step is effected at about 500 °C to remove carbonaceous deposits from the catalyst.

However, it has now surprisingly been found that spent hydrocracking catalysts based on a faujasite-type zeolite, which further contain one or more Group VIB metals and one or more Group VIII metals can be regenerated without the necessity to dry the oxidizing gas or to pretreat the spent catalyst, whereby the activity of the catalyst is essentially restored. Even more surprising is the fact that in comparison with the fresh catalysts the regenerated catalysts show an increased selectivity towards middle distillates when reused in a hydrocracking process. Further a hydrocracking process using such a regenerated catalyst produces less gas.

Accordingly, the present invention relates to a process for the regeneration of a hydrocracking catalyst containing a faujasite-type zeolite having a unit cell size of at least 24.40 Å, one or more metals of Group VIB and one or more metals of Group VIII, and a carbonaceous material, which comprises burning off at least part of carbonaceous material using an oxidizing gas having an oxygen content of at least 12% by volume at a temperature of 150-300 °C, thereby reducing the unit cell size of the faujasite-type zeolite.

The oxidizing gas used in the present process contains free (molecular) oxygen. To moderate the combustion of the carbonaceous material and hence the temperature of the catalyst on which the carbonaceous material has deposited, the oxidizing gas also contains an inert gas such as nitrogen. Advantageously the oxidizing gas contains from 12 to 30 %vol. of free oxygen. It is possible to employ air either diluted with an inert gas or enriched with oxygen, but the use of air as oxidizing gas is particularly preferred.

The regeneration according to the invention is carried out at 150-300 °C, preferably from 200-270 °C.

The duration of the regeneration can vary widely and is dependent a.o. on the degree of decoking that is desired. The time during which the spent catalyst is exposed to the oxidizing gas, is preferably from $\frac{1}{2}$ to 10 hours. The exposure time can be the duration of the regeneration in case of batch processes or the (average) residence time in case of continuous processes.

It will be appreciated that the combustion of carbonaceous material at such low temperatures may not be complete within the time during which the catalyst is exposed to the oxidizing gas. Though the majority of the carbonaceous material is removed during the regeneration at low temperature, in case of heavily coked spent catalysts the carbonaceous material may not be (virtually) completely removed from the regenerated catalyst after the exposure time employed. Instead of continuing the regeneration at the relatively low temperature it is preferred to subject the thus regenerated catalyst to at least one treatment with oxidizing gas having an oxygen content of at least 12% by volume at a temperature of 350-550 °C. The oxidizing gas may be the same as the oxidizing gas used in the regeneration at 150-300 °C.

The duration of the treatment(s) at 350-550 °C can vary as widely as the previous regeneration and will preferably be from 0.5 to 10 hours.

The total pressure employed during the regeneration process is not critical. The use of atmospheric pressure is very feasible. Higher pressures are, however, possible. Suitably the total pressure will be selected from the range of 0.1 to 10 bar.

As has been stated before, the regeneration may be carried out in the presence of steam. The presence of steam may be caused by the relative humidity of the oxidizing gas, such as air. It will be appreciated that the carbonaceous material may contain hydrogen, and hence that during the combustion thereof water vapour is formed. Another source for steam may be supplied by the gases which are used to heat the spent catalyst. Such gases may include the combustion gases of light hydrocarbons, such as natural gas, ethane propane or butane. Such combustion gases contain of course water vapour. Since the process according to the present invention is not adversely affected by the presence of steam no dryer for the oxidizing gas and no removal of hydrocarbons and/or water (stripping), prior to the actual regeneration, is required. It is even preferred that the spent catalyst has not been subjected to a treatment with an inert gas, e.g. for removal of hydrocarbons and/or water, before it is regenerated.

The regeneration can be carried out in batches or in a continuous manner. The bed of spent catalyst can be static, or moving, e.g. on a belt or in a rotary kiln, or it can be fluidized.

The hydrocracking catalyst regenerated in the present process contains a faujasite-type zeolite. Preferably it also comprises an amorphous refractory oxide. Suitable amorphous oxides include silica, alumina, silica-alumina, thoria, zirconia, titania, magnesia and mixtures of two or more thereof. The refractory oxides may be used as binder and/or as an amorphous cracking component. It is advantageous to have alumina as both amorphous cracking component and binder. The amount of refractory oxide may suitably vary from 10 to 90 %w based on the total of faujasite-type zeolite and refractory oxide.

The hydrocracking catalyst to be regenerated comprises one or more metals of Group VIB and of Group VIII of the periodic table of the elements. Preferably the catalyst comprises one or more nickel and/or cobalt compounds and one or more molybdenum and/or tungsten compounds. The metal compounds in the catalyst are preferably in the oxidic and/or sulphidic form. When the catalyst is used in a hydrocracking process the metal compounds are more preferably in sulphidic form. Conveniently, the catalyst has thereto been subjected to a sulphiding treatment prior to actual use in a hydrocracking process.

3

Preparation of metals-containing catalysts is known in the art. Preparation methods include ion exchange, impregnation, and (co-)mulling of the ingredients.

The amounts of metal compounds in the catalyst composition may suitably range from 2 to 20 pbw (parts by weight) of one or more Group VIB metals and from 1 to 10 pbw of one or more Group VIII metals, calculated as metals per 100 pbw of the total of faujasite-type zeolite, metal compounds and refractory oxide, if present.

The amount of carbonaceous material may range within wide limits. The feasible limits will mainly be determined by economic considerations. Due to the deposits of carbonaceous material the catalyst activity decreases and consequently the hydrocracking temperature has to be increased to obtain the desired conversion. When the temperature increase becomes too high from a technical and economic standpoint the catalyst may be subjected to regeneration. Suitably the catalyst contains then from 5 to 40 %w of carbonaceous material calculated on the weight of the total catalyst.

The faujasite-type zeolite used in the catalyst of the present invention is preferably a zeolite Y. The zeolite Y is characterized by the faujasite X-ray diffraction pattern and suitably has a $SiO_2/Al_2O_3$ molar ratio of 4 to 25, in particular of 6 to 15. It has been found that in particular zeolites which before regeneration have a unit cell size above 24.40 Å (2.44 nm) show the desired selectivity increase. Hence, in the process of the present invention, preferably, use is made of a faujasite-type zeolite with a unit cell size of at least 24.40 Å. The upper limit of the unit cell size is suitably 24.75 Å, in particular 24.65 Å. It is emphasized that although the present invention favours the use of zeolites with a unit cell size of 24.40 to 24.75 Å it is possible to use zeolites with smaller or greater unit cell sizes in the present process. When catalysts comprising zeolites with a unit cell size above 24.40 Å have been subjected to a regeneration process according to the invention, it has been found that the unit cell size of the zeolite has decreased. In this way unit cell size values below 24.40 Å are sometimes attainable.

Catalysts which are suitable for being subjected to a regeneration process include in particular those catalysts that have been used in a hydrocracking process for a considerable time, up to several years. It is, however, also possible to subject a newly synthesized catalyst to an accelerated ageing experiment and subject the carbonaceous material-containing catalyst obtained after such an experiment to the regeneration process of the present invention. In this way the selectivity increase can be obtained with the thus prepared catalyst without having to subject it to an ageing period in an actual hydrocracking process.

The present invention also relates to a hydrocracking process for enhancing middle distillate production from hydrocarbon oils comprising contacting said hydrocarbon oils at elevated temperature and pressure in the presence of hydrogen with a regenerated catalyst comprising 0.37 - 3.72%wt of carbonaceous material, which catalyst has been regenerated according to the process defined hereinabove.

In such a hydrocracking process a substantial reduction in average molecular weight and boiling point of a hydrocarbon oil can be accomplished by contacting the hydrocarbon oil with a regenerated catalyst at elevated temperature and pressure and in the presence of hydrogen.

Examples of such processes comprise single-stage hydrocracking, two-stage hydrocracking, series-flow hydrocracking as well as mild hydrocracking. The regenerated catalyst is advantageously used in the second stage of a two-stage process.

It will be appreciated that the hydrocracking processes in accordance with the present invention may be carried out suitably in bunker-type operations, i.e. by using reactor vessels allowing for periodical or intermittent catalyst removal and replenishment. Use can be made of the various bunker-techniques described in the art.

Hydrocarbon oils which can be suitably applied in the process according to the present invention comprise gas oils, vacuum gas oils, deasphalted oils, long residues, short residues, catalytically cracked cycle oils, coker gas oils and other thermally cracked gas oils and syncrudes, optionally originating from tar sands, shale oils, residue upgrading processes or biomass. Combinations of various hydrocarbon oils can also be applied.

It may be desirable to subject part or all of the hydrocarbon oil to one or more (hydro)treatment steps prior to its use in the hydrocracking process according to the present invention. It is often found convenient to subject the hydrocarbon oil to a (partial) hydrotreatment. When rather heavy oils are to be processed it will be advantageous to subject such oils to a (hydro) demetallization treatment.

Suitable process conditions to be applied comprise temperatures in the range of from 250 °C to 500 °C, pressures from 25 to 300 bar and space velocities between 0.1 and 10 kg hydrocarbon oil per litre of catalyst per hour (kg/l.h). Gas/oil ratios between 100 and 5000 Nl/kg oil can suitably be used.

Preferably, the hydrocracking process according to the present invention is carried out at a temperature between 300 °C and 450 °C, a pressure between 25 and 200 bar and a space velocity between 0.2 and 5 kg oil per litre of catalyst per hour. Preferably, gas/oil ratios between 250 and 2000 Nl/kg are applied.

The invention will now be illustrated by means of the following Examples.

Example 1

A spent commercial hydrocracking catalyst containing zeolite Y, nickel and tungsten, was regenerated according to the invention in a series of experiments.

In experiment 1 the catalyst was heated to 240 °C in a rotary kiln and air was passed over it. The average residence time of the catalyst in the kiln was about 3 hrs.

In experiment 2 the procedure of experiment 1 was repeated but subsequently the thus regenerated catalyst was subjected to a similar treatment at a higher temperature (480 °C).

In experiment 3 the regeneration was accomplished in three steps at 240, 420 and 480 °C.

The regeneration conditions and some of the characteristics of the catalysts are indicated in Table I.

<u>Table I</u>

|  | Spent catalyst | Regeneration experiment | | |
|---|---|---|---|---|
|  |  | 1 | 2 | 3 |
| Regeneration temperature, °C (average residence time, h) | – <br> – <br> – | 240 (3) <br> – <br> – | 240 (3) <br> 480 (3) <br> – | 240 (3) <br> 420 (3) <br> 480 (3) |
| Carbon, %w on total catalyst | 9.1 | 3.72 | 0.46 | 0.58 |
| unit cell size, Å | 24.48 | 24.39 | 24.39 | 24.39 |

<u>Example 2</u>

A catalyst substantially regenerated as described in experiment 2 of Example 1 having the characteristics as indicated in Table II, was used in a hydrocracking process. For comparison reasons the characteristics of the fresh catalyst, i.e. before having been used in a hydrocracking process and having been regenerated, are included in the Table, too.

6

Table II

|  | Fresh catalyst | Regenerated catalyst |
|---|---|---|
| Ni, pbw/100 pbw carrier | 2.6 | 2.6 |
| W, pbw/100 pbw carrier | 8.2 | 8.2 |
| carbon, pbw/100 pbw carrier | <0.1 | 0.37 |
| sulphur, pbw/100 pbw carrier | <0.1 | <0.1 |
| Y-zeolite unit cell size, Å | 24.52 | 24.37 |

The experiment was conducted in two reactors linked together in a once-through mode of operation. Catalyst volumes were 100 and 76 ml in the first and second reactor, respectively. In both reactors the catalysts were diluted with 0.2 mm SiC particles in a 1:1 volume ratio. As feedstock a hydrocarbon oil was used with the following properties:

| carbon content, %w | 87.66 |
|---|---|
| hydrogen content, %w | 11.97 |
| sulphur content, %w | 0.28 |
| nitrogen content, %w | 0.097 |

| density (at 15 °C), kg/m$^3$ | 917.7 |
|---|---|
| initial boiling point, °C | 196 |
| 10 %w recovery | 233 |
| 30 %w recovery | 298 |
| 50 %w recovery | 345 |
| 70 %w recovery | 394 |
| 90 %w recovery | 461 |
| 98 %w recovery | 521 |
| final boiling point | 555 |

| fraction with boiling point | | |
|---|---|---|
| 190 - 228 °C, | %w | 26.8 |
| 228 - 338 °C, | %w | 20.0 |
| 338 °C$^+$, | %w | 53.2 |

The first reactor was loaded with a commercial hydrodenitrogenation catalyst, comprising nickel and molybdenum on alumina. In the first reactor the feedstock was denitrogenated to allow a nitrogen content of 10 ppmw in the product that was fed to the second reactor.

The second reactor contained the regenerated catalyst. The temperature was adjusted such that about 80% of the 338 °C$^+$-fraction was converted in the second reactor. The total yield of products obtained after a certain running period, the calculated temperature required to get 80 %w conversion of the 338 °C$^+$ fraction ($T_{required}$) and the selectivity in the second reactor for the formation of the various products are indicated in Table III. It is observed that the selectivities of the second reactor were calculated after subtracting the yields on cracked products out of the first reactor. The total yield of products amounts to more than 100% since hydrogen is added during the hydrocracking process.

## Table III

| | | |
|---|---|---|
| Run time, h | 715 | 906 |
| **Products** | | |
| $C_{1-4}$, %w | 5.75 | 5.51 |
| $C_5^+$-190 $^{\circ}$C, %w | 54.92 | 56.65 |
| 190-288 $^{\circ}$C, %w | 32.40 | 31.80 |
| 288-338 $^{\circ}$C, %w | 5.40 | 5.50 |
| 338 $^{\circ}$C$^+$, %w | 3.80 | 3.00 |
| $T_{required}$, $^{\circ}$C | 357.9 | 358.4 |
| **Selectivity in reactor 2** | | |
| $C_{1-4}$ %w | 4.38 | 3.93 |
| $C_5$-190 $^{\circ}$C %w | 54.21 | 55.06 |
| 190-288 $^{\circ}$C %w | 34.63 | 33.16 |
| 288-338 $^{\circ}$C %w | 6.78 | 7.85 |

Comparative experiment

The fresh catalyst having the characteristics indicated in Table II was used in a hydrocracking process as described in Example 2. The results of this process are indicated in Table IV.

8

## Table IV

| Run time, h | 701 | 893 |
|---|---|---|
| **Products** | | |
| $C_{1-4}$ , %w | 5.90 | 5.49 |
| $C_5^+$-190 °C, %w | 53.88 | 54.60 |
| 190-288 °C, %w | 32.00 | 31.60 |
| 288-338 °C, %w | 5.70 | 5.70 |
| 338 °C$^+$ , %w | 4.90 | 4.90 |
| $T_{required'}$ °C | 354.8 | 354.7 |
| **Selectivity in reactor 2** | | |
| $C_{1-4}$ , %w | 5.75 | 5.31 |
| $C_5$-190 °C, %w | 57.40 | 57.86 |
| 190-288 °C, %w | 31.39 | 31.22 |
| 288-338 °C, %w | 5.46 | 5.61 |

From the results in Tables III and IV it is apparent that the use of the regenerated catalyst results in a reduced yield of unconverted heavy product (338 °C$^+$-fraction). The selectivity of the hydrocracking catalyst for the formation of gas is reduced and its selectivity for the formation of middle distillates is increased after regeneration. The cracking activity, expressed as the temperature required to convert 80% of the 338 °C$^+$-fraction is only slightly lower for the regenerated catalyst than the activity of the fresh catalyst.

## Claims

1. Process for the regeneration of a hydrocracking catalyst containing a faujasite-type zeolite having a unit cell size of at least 24.40 Å, one or more metals of Group VIB and one or more metals of Group VIII, and a carbonaceous material, which comprises burning off at least part of carbonaceous material using an oxidizing gas having an oxygen content of at least 12% by volume at a temperature of 150-300 °C, thereby reducing the unit cell size of the faujasite-type zeolite.

2. Process according to claim 1, in which the oxidizing gas is air.

3. Process according to claim 1 or 2, in which the temperature is from 200 to 270 °C.

4. Process according to any one of claims 1 to 3 in which the time during which the hydrocracking catalyst is exposed to the oxidizing gas is from 0.5 to 10 hours.

5. Process according to any one of claims 1 to 4, in which the thus regenerated catalyst is subjected to at least one treatment with oxidizing gas having an oxygen content of at least 12% by volume at a temperature of 350-550 °C.

6. Process according to any one of claims 1 to 5, in which the hydrocracking catalyst to be regenerated contains from 5 to 40 %w of carbonaceous material, based on the weight of the total catalyst.

EP 0 310 163 B1

7. Hydrocracking process for enhancing middle distillate production from hydrocarbon oils comprising contacting said hydrocarbon oils at elevated temperature and pressure in the presence of hydrogen with a regenerated catalyst comprising 0.37-3.72 %wt of carbonaceous material, which catalyst has been regenerated according to any one of claims 1-6.

## Patentansprüche

1. Verfahren für die Regenerierung eines Hydrocrack-Katalysators, enthaltend einen faujasitartigen Zeolith mit einer Elementarzellgröße von mindestens 24,40 Å, ein oder mehrere Metalle der Gruppe VIB und ein oder mehrere Metalle der Gruppe VIII sowie ein kohlenstoffartiges Material, umfassend das Abbrennen von mindestens einem Teil des kohlenstoffartigen Materials unter Verwendung eines oxidierenden Gases mit einem Sauerstoffgehalt von mindestens 12 Vol% bei einer Temperatur von 150 - 300 °C, wobei die Elementarzellgröße des faujasitartigen Zeoliths verringert wird.

2. Verfahren nach Anspruch 1, in dem das oxidierende Gas Luft ist.

3. Verfahren nach Anspruch 1 oder 2, in dem die Temperatur im Bereich von 200 bis 270 °C liegt.

4. Verfahren, nach irgendeinem der Ansprüche 1 bis 3, in dem die Zeit, während der der Hydrocrack-Katalysator dem oxidierenden Gas ausgesetzt ist, von 0,5 bis 10 Stunden beträgt.

5. Verfahren nach irgendeinem der Ansprüche 1 bis 4, in dem der derart regenerierte Katalysator mindestens einer Behandlung mit einem oxidierenden Gas mit einem Mindestsauerstoffgehalt von 12 Vol% bei einer Temperatur von 350-550 °C unterworfen wird.

6. Verfahren nach irgendeinem der Ansprüche 1 bis 5, in dem der Hydrocrack-Katalysator, der regeneriert werden soll, von 5 bis 40 Gewichts% an kohlenstoffartigem Material enthält, basierend auf dem Gewicht des gesamten Katalysators.

7. Hydrocrack-Verfahren zur Verbesserung der Mitteldestillat-Produktion aus Kohlenwasserstoffölen, umfassend das in Berührung bringen der Kohlenwasserstofföle bei erhöhter Temperatur und erhöhtem Druck in der Gegenwart von Wasserstoff mit einem regenerierten Katalysator, umfassend 0,37-3,72 Gewichts% an kohlenstoffhaltigem Material, wobei der Katalysator nach irgendeinem der Ansprüche 1-6 regeneriert wurde.

## Revendications

1. Procédé pour la régénération d'un catalyseur d'hydrocraquage contenant une zéolite du type faujasite ayant une dimension des mailles unitaires d'au moins 24,40 Å, un ou plusieurs métaux du groupe VIB et un ou plusieurs métaux du groupe VIII, et une matière carbonés, qui comprend l'élimination par combustion d'au moins une partie de la matière carbonée en utilisant un gaz oxydant ayant une teneur en oxygène d'au moins 12 % en volume à une température de 150-300 °C, de manière à réduire la dimension des mailles unitaires de la zéolite du type faujasite.

2. Procédé selon la revendication 1, dans lequel le gaz oxydant est de l'air.

3. Procédé selon la revendication 1 ou 2, dans lequel la température est comprise entre 200 et 270 °C.

4. Procédé selon l'une quelconque des revendications 1 à 3, dans lequel le temps durant lequel le catalyseur d'hydrocraquage est exposé au gaz oxydant est compris entre 0,5 et 10 heures.

5. Procédé selon l'une quelconque des revendications 1 à 4, dans lequel le catalyseur ainsi régénéré est soumis à au moins un traitement par un gaz oxydant ayant une teneur en oxygène d'au moins 12 % en volume à une température de 350-550 °C.

6. Procédé selon l'une quelconque des revendications 1 à 5, dans lequel le catalyseur d'hydrocraquage à régénérer contient de 5 à 40 % en poids de matière carbonée, par rapport au poids du catalyseur total.

10

7. Procédé d'hydrocraquage pour améliorer la production de distillats moyens à partir d'huiles d'hydrocarbures, comprenant la mise en contact de ces huiles d'hydrocarbures à température et pression élevées en présence d'hydrogène avec un catalyseur régénéré comprenant de 0,37 à 3,72 % en poids de matière carbonée, ce catalyseur ayant été régénéré selon l'une quelconque des revendications 1-6.